# EUROPÄISCHE PATENTANMELDUNG

(11) **EP 4 825 577 A1**
(43) Veröffentlichungstag der Anmeldung: **21.10.2026**
(21) Anmeldenummer: 26168994.7
(22) Anmeldetag: 30.03.2026
(51) Int. Cl.: B32B 7/12, B32B 3/08, B32B 27/08

(54) **VERFAHREN ZUM FÜGEN OPTISCHER SCHICHTEN UND STAPEL OPTISCHER SCHICHTEN**

(30) Priorität: 15.04.2025 DE 102025114815
(71) Anmelder: AUMOVIO Germany GmbH, 60488 Frankfurt am Main (DE)
(72) Erfinder: Braam, Axel, 60488 Frankfurt am Main (DE)
(74) Vertreter: Aumovio Corporation

(57) **Zusammenfassung**

Die Erfindung betrifft ein Verfahren zum Fügen optischer Schichten und einen damit hergestellten Stapel optischer Schichten. Das Verfahren weist auf: Bereitstellen (S1) mehrerer optischer Schichten (21,22,...), Ausrichten (S2) der optischen Schichten (21,22,...) zueinander, Versehen (S3) der ausgerichteten optischen Schichten (21,22,...) mit einer Randdichtung (7), Vergießen (S5) der ausgerichteten optischen Schichten (21,22,...) mit einem optisch klaren Flüssigklebstoff (5), und Aushärten (S6) des optisch klaren Flüssigklebstoffs (5) zu einer Vergußform (4).

## Beschreibung

Die vorliegende Erfindung betrifft ein Verfahren zum Fügen optischer Schichten und einen Stapel optischer Schichten.

Optisch aktive oder transparente Folien/Schichten/Gläser werden durch transparente Klebeschichten (OCA, optical clear adhesive) oder durch den Auftrag flüssiger Klebeschichten (OCR, optical clear resin) mit anschließender Härtung schichtweise aufeinander laminiert. Durch den schichtweisen Aufbau mehrschichtiger Bauteile sind entsprechend viele Prozeßschritte mit entsprechenden Ausschußzahlen verbunden. Meist wird nicht der gesamte Prozeß durch einen einzigen Hersteller ausgeführt, sondern unterschiedliche Teilschritte werden durch unterschiedliche Hersteller ausgeführt. Dementsprechend viele unterschiedliche Materialien werden kombiniert, die später im fertigen Produkt unerwünschte optische Effekte hervorrufen können.

Eine Alternative zum schichtweisen Aufbau optischer Schichten ist erwünscht.

Ein erfindungsgemäßes Verfahren zum Fügen optischer Schichten weist folgende Schritte auf:
- Bereitstellen mehrerer optischer Schichten;
- Ausrichten der optischen Schichten zueinander;
- Versehen der ausgerichteten optischen Schichten mit einer Randdichtung;
- Vergießen der ausgerichteten optischen Schichten mit einem optisch klaren Flüssigklebstoff;
- Aushärten des optisch klaren Flüssigklebstoffs zu einer Vergußform.

Auf diese Weise wird ein Fügen mehrerer optischer Schichten zu einem Stapel in einem einzigen Prozeß ermöglicht. Es ist nur ein einziger Ausrichteschritt erforderlich. Durch das Vergießen der ausgerichteten optischen Schichten in einem Schritt werden optische Mängel, die bei mehrschrittiger Ausführung durch gegebenenfalls unterschiedliche Akteure unvermeidbar sind und durch hohen Aufwand ausgeglichen oder reduziert werden müssen vermieden. Die Randdichtung dient sowohl zum Abdichten der zwischen den optischen Schichten befindlichen Hohlräume als auch zum Fixieren der Ausrichtung der optischen Schichten.

Gemäß einer Ausführung des Verfahrens werden die optischen Schichten zum Ausrichten vorzugsweise senkrecht nach unten hängend angeordnet. Die optischen Schichten richten sich auf diese Weise vorteilhaft der Schwerkraft folgend von selbst zueinander aus. Auch eine andere als eine senkrechte Ausrichtung ist hier möglich. Die optischen Schichten werden in diesem Fall beispielsweise vorgespannt oder mechanisch ausgerichtet.

Gemäß einer Ausführung des Verfahrens wird vor dem Vergießen ein Unterdruck um die ausgerichteten optischen Schichten herum hergestellt. Aufgrund des um die optischen Schichten herum und zwischen den optischen Schichten hergestellten Unterdrucks verbleiben beim Vergießen vorteilhaft keine Luftblasen zwischen den optischen Schichten. Solche Luftblasen üben störende optische Effekte aus.

Gemäß einer Ausführung des Verfahrens erfolgt das Vergießen durch Einfüllen von optisch klarem Flüssigklebstoff von oben. Der Flüssigklebstoff läuft dabei der Schwerkraft folgend vorteilhaft von selbst in die Hohlräume zwischen den optischen Schichten hinein.

Gemäß einer Ausführung des Verfahrens erfolgt das Vergießen durch Ansaugen von optisch klarem Flüssigklebstoff von unten. Dabei werden die zueinander ausgerichteten optischen Folien vorteilhaft von oben in ein Bad mit optisch klarem Flüssigklebstoff abgesenkt, welcher durch Ansaugen in die Hohlräume zwischen den optischen Schichten gelangt. Eine Einfüllvorrichtung, mit der Flüssigklebstoff von oben oder von der Seite zugeführt wird, ist somit nicht erforderlich.

Gemäß einer Ausführung des Verfahrens erfolgt das Aushärten thermisch oder katalytisch. Thermisch oder katalytisch härtende flüssige optisch klare Klebstoffe (OCRs) haben den Vorteil, daß die optischen Schichten nicht mit UV-Strahlung gehärtet werden müssen, was entweder in der Schichtdicke schwierig ist oder, aufgrund der Empfindlichkeit der optischen Schichten, garnicht möglich ist.

Ein erfindungsgemäßer Stapel optischer Schichten weist mehrere optische Schichten auf, welche parallel zueinander ausgerichtet sind, eine Randdichtung an zumindest zweier der Kanten der optischen Schichten, und eine Vergußform, die aus zwischen den einzelnen benachbarten optischen Schichten befindlichem ausgehärtetem optisch klarem Flüssigklebstoff besteht. Ein solcher Stapel weist vorteilhaft mehrere parallel zueinander ausgerichtete optische Schichten auf und hat ein geringes Gewicht und eine geringe Dicke.

Vorteilhaft ist die optische Schicht eine optische Folie.

Weitere Ausgestaltungen der Erfindung und deren Vorteile können auch der nachfolgenden Figurenbeschreibung entnommen werden. Dabei zeigen
- Fig.1: ein erfindungsgemäßes Verfahren;
- Fig.2: Seiten- und Frontansicht einer optischen Folie;
- Fig.3-5: einen erfindungsgemäßen Stapel optischer Schichten zu unterschiedlichen Schritten seiner Herstellung gemäß einer ersten Ausführungsform; und
- Fig.6-11: einen erfindungsgemäßen Stapel optischer Schichten zu unterschiedlichen Schritten seiner Herstellung gemäß einer zweiten Ausführungsform.

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, daß sich die Erfindung nicht auf die dargestellten Ausführungsformen beschränkt und daß die beschriebenen Merkmale auch kombiniert oder modifiziert werden können, ohne den Schutzbereich der Erfindung zu verlassen, wie er in den angehängten Ansprüchen definiert ist.

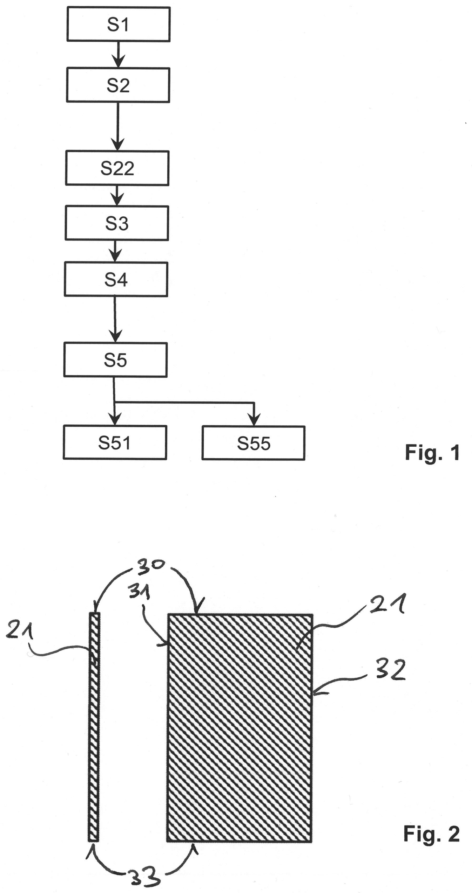

Fig.1 zeigt ein Flußdiagramm für ein erfindungsgemäßes Verfahren. Dieses wird auch im Zusammenhang mit den nachfolgenden Figuren beschrieben. Zunächst erfolgt ein Bereitstellen S1 mehrerer optischer Schichten 21,22,..., welche anschließend zueinander ausgerichtet werden. Das Ausrichten S2 kann auf unterschiedliche Art und Weise erfolgen. Vorzugsweise erfolgt das Ausrichten S2 durch ein nach unten hängendes Anordnen S22 der optischen Schichten 21,22,... . Die ausgerichteten optischen Schichten 21,22,... werden anschließend mit einer Randdichtung 71,72,73 versehen S3. Optional erfolgt ein Herstellen S4 eines Unterdrucks um die ausgerichteten optischen Schichten 21,22,... herum. Die ausgerichteten optischen Schichten 21,22,... werden dann mit einem optisch klaren Flüssigklebstoff 5 vergossen S5. Anschließend erfolgt ein Aushärten S6 des optisch klaren Flüssigklebstoffs 5 zu einer Vergußform 4. Das Aushärten S6 erfolgt beispielsweise thermisch oder katalytisch. Gemäß einer ersten Ausführungsform erfolgt das Vergießen S5 durch Einfüllen S51 von optisch klarem Flüssigklebstoff 5 von oben. Gemäß einer zweiten Ausführungsform erfolgt das Vergießen S5 durch Ansaugen S55 von optisch klarem Flüssigklebstoff 5 von unten.

Fig.2 zeigt links ein Seitenansicht und rechts eine Frontansicht einer optischen Schicht 21, die hier als optische Folie ausgebildet ist, die der Übersichtlichkeit halber mit übertriebener Dicke dargestellt ist. Gemäß der beiden im folgenden Text beschriebenen Ausführungsformen ist die Folie an ihrer oberen Kante 30 senkrecht nach unten hängend aufgehängt. In der Frontansicht erkennt man die linke Kante 31 und die rechte Kante 32 der optischen Schicht 21. In beiden Ansichten erkennt man auch deren untere Kante 33.

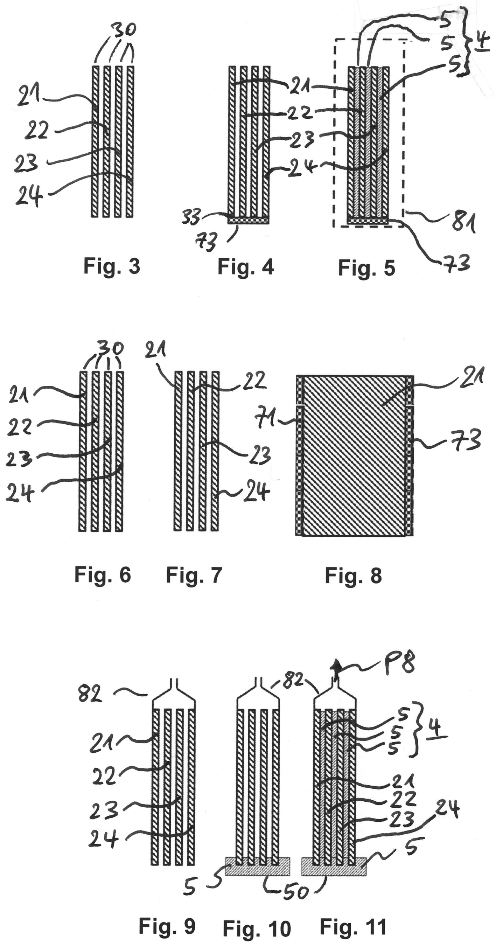

Die Fig.3-5 zeigen einen erfindungsgemäßen Stapel optischer Schichten 21-24 im Querschnitt in Seitenansicht zu unterschiedlichen Schritten seiner Herstellung gemäß einer ersten Ausführungsform. In Fig.3 erkennt man vier optische Schichten 21-24, die an ihren oberen Kanten 30 befestigt nach unten hängend bereitgestellt S1 und parallel zueinander ausgerichtet S2 sind. In Fig.4 erkennt man, daß die unteren Kanten 33 der optischen Schichten 21-24 mit einer untere Randdichtung 73 versehen sind. Im dargestellten Querschnitt ist nicht sichtbar, daß die optischen Schichten 21-24 auch an der jeweiligen linken Kante 31 und der jeweiligen rechten Kante 32 jeweils mit einer Randdichtung 71,72 versehen ist. Fig.5 zeigt die mit Randdichtungen 71-73 versehenen optischen Schichten 21-24 in einer Vakuumkammer 81. Der optisch klare Flüssigklebstoff 5 ist dabei bereits unter Vakuum von oben eingefüllt S51 worden und vergossen S5 worden und zur Vergußform 4 ausgehärtet S6 worden. Der fertig gefügte Stapel kann dann der Vakuumkammer 81 entnommen werden.

Die Fig.6-11 zeigen einen erfindungsgemäßen Stapel optischer Schichten 21-24 im Querschnitt in Seitenansicht zu unterschiedlichen Schritten seiner Herstellung gemäß einer zweiten Ausführungsform. In Fig.6 erkennt man vier optische Schichten 21-24, die an ihren oberen Kanten 30 befestigt nach unten hängend bereitgestellt S1 und parallel zueinander ausgerichtet S2 sind. Im dargestellten Querschnitt der Fig.7 ist nicht sichtbar, daß die optischen Schichten 21-24 an der jeweiligen linken Kante 31 und der jeweiligen rechten Kante 32 jeweils mit einer Randdichtung 71,72 versehen S3 ist. Dies ist in Fig.8 erkennbar, die beispielhaft einen Querschnitt durch die mit Randdichtungen 71,72 versehene optische Schicht 21 in Frontansicht zeigt.

In Fig.9 erkennt man, daß am oberen Ende der optischen Schichten 21-24 eine Saugvorrichtung 82 angeschlossen ist. Sie dichtet an den beiden äußeren optischen Schichten 21,24 und an den hier nicht sichtbaren Randdichtungen 71,73 ab. In Fig.10 erkennt man, daß der untere Bereich der optischen Schichten 21-24 in ein oben offenes Reservoir 50 für optisch klaren Flüssigklebstoff 5 eintaucht. In Fig.11 ist bereits zum Herstellen S4 eines Unterdrucks Luft in Richtung Pfeil P8 abgesaugt worden, daraufhin optisch klarer Flüssigklebstoff 5 in die Zwischenräume zwischen den optischen Schichten 21-24 angesaugt S55 worden, und der Flüssigklebstoff 5 auch bereits zur Vergußform 4 ausgehärtet worden.

Mit anderen Worten betrifft die Erfindung das Fügen optischer Schichten. Anstelle des schichtweisen Aufbaus des optischen Bauteils, welches einen Stapel optischer Schichten aufweist, sieht die Erfindung den Verguß aller optischen Schichten mit flüssigem OCR (englisch: OCR - Optically Clear Resin) vor. Dazu werden alle optischen Schichten zueinander ausgerichtet und im richtigen Abstand zueinander angeordnet. Wahlweise unter vermindertem Druck wird dann die Schichtstruktur in einem Schritt vergossen. Prinzipiell sind zwei Ausführungsformen näher beschrieben: Einfüllen des OCRs von oben (erste Ausführungsform) oder das Befüllen von unten mittels Unterdruck (zweite Ausführungsform). Das OCR wird anschließend thermisch oder katalytisch ausgehärtet. Der simultane Verguß reduziert die Anlagentechnik in der Anzahl und der Komplexität und auch den Prozeßausschuß erheblich. Durch den Verguß wird erfindungsgemäß die Blasenbildung (ein typisch auftretender Fehler beim Fügen optischer Schichten) erheblich minimiert. Zusätzlich wird auf die zu fügenden Schichten keine nennenswerte mechanische Kraft ausgeübt, was besonders für das Fügen optisch aktiver Schichten extrem wichtig ist.

### Bezugszeichenliste

- 21,22,...: optische Schicht
- 30: Kante, oben
- 31: Kante, links
- 32: Kante, rechts
- 33: Kante, unten
- 4: Vergußform
- 5: optisch klarer Flüssigklebstoff
- 50: Reservoir
- 71: Randdichtung, links
- 72: Randdichtung, rechts
- 73: Randdichtung, unten
- 81: Vakuumkammer
- 82: Saugvorrichtung

- P8: Pfeil

- S1-S22: Verfahrensschritte

## Patentansprüche

1. Verfahren zum Fügen optischer Schichten mit den Schritten
- Bereitstellen (S1) mehrerer optischer Schichten (21,22,...);
- Ausrichten (S2) der optischen Schichten (21,22,...) zueinander;
- Versehen (S3) der ausgerichteten optischen Schichten (21,22,...) mit einer Randdichtung (7);
- Vergießen (S5) der ausgerichteten optischen Schichten (21,22,...) mit einem optisch klaren Flüssigklebstoff (5);
- Aushärten (S6) des optisch klaren Flüssigklebstoffs (5) zu einer Vergußform (4).

2. Verfahren gemäß Anspruch 1, mit dem weiteren Schritt
- senkrecht nach unten hängendes Anordnen (S22) der optischen Schichten (21,22,...) zum Ausrichten (S2).

3. Verfahren gemäß einem der vorhergehenden Ansprüche, wobei vor dem Vergießen (S5) der weitere Schritt
- Herstellen (S4) eines Unterdrucks um die ausgerichteten optischen Schichten (21,22,...) erfolgt.

4. Verfahren gemäß einem der vorhergehenden Ansprüche, wobei das Vergießen (S5) durch Einfüllen (S51) von optisch klarem Flüssigklebstoff (5) von oben erfolgt.

5. Verfahren gemäß einem der vorhergehenden Ansprüche 1-3, wobei das Vergießen (S5) durch Ansaugen (S55) von optisch klarem Flüssigklebstoff (5) von unten erfolgt.

6. Verfahren gemäß einem der vorhergehenden Ansprüche, wobei das Aushärten (S6) thermisch oder katalytisch erfolgt.

7. Stapel optischer Schichten, insbesondere hergestellt nach einem Verfahren gemäß einem der vorhergehenden Ansprüche, aufweisend:
- mehrere optische Schichten (21,22,...), welche parallel zueinander ausgerichtet sind;
- eine Randdichtung (7) an zumindest zweier der Kanten (31,32,33) der optischen Schichten (21,22,...); und
- eine Vergußform (4), die aus zwischen den einzelnen benachbarten optischen Schichten (21,22,...) befindlichem ausgehärtetem optisch klarem Flüssigklebstoff (5) besteht.

8. Verfahren oder Stapel gemäß einem der vorhergehenden Ansprüche, wobei zumindest eine optische Schicht (21,22,...) eine optische Folie ist.
